# EUROPEAN PATENT APPLICATION

(11) **EP 4 354 077 A1**
(43) Date of publication of application: **17.04.2024**
(21) Application number: 22075015.2
(22) Date of filing: 14.10.2022
(51) Int. Cl.: F42B 10/38, F02K 1/04, F02K 7/10, F02K 9/97, F42B 5/10, F42B 12/06, F42B 10/40

(54) **A SOLID FUEL PROPELLED PROJECTILE**

(71) Applicant: Nederlandse Organisatie voor toegepast-natuurwetenschappelijk Onderzoek TNO, 2595 DA 's-Gravenhage (NL)
(72) Inventor: VERAAR, Ronald Gerard, 2595 DA s'Gravenhage (NL); WIELING, Wolter Pieter Wilhelmus, 2595 DA s'Gravenhage (NL)
(74) Representative: V.O.

(57) **Abstract**

In an aspect of the invention there is provided a solid fuel propelled projectile, comprising:
an elongated projectile motor case and/or a core piece having solid fuel provided thereon to form a combustion chamber between the motor case and core piece;
an air intake provided on the front side of the projectile providing air into the combustion chamber;
an exhaust nozzle provided on the rear side of the combustion chamber; said exhaust nozzle provided by a ring element extending rearwards of the motor case, and an aerospike profile surrounding the core piece; wherein the aerospike profile extends rearward of the ring element.

## Description

### FIELD

The present invention relates to solid fuel assisted gun-launched solid fuel propelled projectiles.

### BACKGROUND

In the art so called solid fuel propelled projectiles are known, e.g. from US4573412, disclosing a rocket projectile, comprising an elongated projectile motor case and a core piece to form a combustion chamber between the motor case and core piece. An exhaust nozzle profile is provided on the rear side of the combustion chamber. A special type of solid fuel projectiles are gun-launched projectiles, e.g. described in Veraar, R.G., Ramjet Applications of the Solid Fuel Combustion Chamber, TNO, Symposium Proc. `High Speed Airbreathing Propulsion, the Solid Fuel Combustion Chamber and Beyond', Rijswijk, The Netherlands, June 7, 1991. It is noted that the disclosed projectiles are of a ramjet type, comprising an air intake provided on the front side of the projectile providing air into the combustion chamber. This has an advantage, since the projectile does not need an additional oxidator for converting the solid fuel in the combustion chamber. This also leads to a reduced volume and mass of the fuel and thus the projectile, since it does not take the oxidator on board. These gun-launched projectiles may ignite the solid fuel ramjet (SFRJ) motor incorporated in it, due to the high velocities of the launch or due to the gun propellant. The SFRJ motor is at least active over a part of the flight trajectory, and will typically start just after launch by self-ignition.

Typical launching velocities are well above 1 Mach, for instance 4 Mach. In some instances, the projectiles may be of a KE penetrator type, which is the Kinetic Energy long rod penetrator, of a high relative density rod with a high length/diameter ratio, so that a very high kinetic energy impact occurs on a small diameter. Thus a concentrated deposition of kinetic energy occurs on the target, which aids to its penetrating power,

Another variant may be the PELE type, which is a `penetrator with enhanced lateral efficiency'. This is a projectile that is more aimed at fragmentating on a larger impact area, and not specifically targeted at penetrating power. The PELE type is provided as an elongated object that, instead of a high relative density central rod is provided with a high relative density mantle. Both variants may be provided with a SFRJ motor or any other solid fuel propelled motor. The SFRJ motor is a jet motor without moving parts, which uses solid state fuel provided on the mantle and/or core, wherein either a core is of a high relative density to provide a KE type penetrator, or the mantle is of a high relative density to provide a PELE type penetrator.

Especially for the KE type, there is a benefit in providing a large length to diameter ratio of the core piece, since this aids in the amount of kinetic energy that impacts a target surface. In addition, an advantage of a solid fuel propelled projectile is that it will not significantly reduce its speed due to air impact, which also contributes to the kinetic energy that can be transferred on impact, which aids to its penetrating power.

A specific challenge for gun launched, solid fuel propelled projectiles is to provide a motor design that withstands the large accelerations on launch, especially to the exhaust nozzle of the solid fuel motor. While solid fuel propelled projectiles reach higher velocities than non-propelled ones, there is also a difficulty in providing a motor design that accommodates sufficient long core pieces, due to the structural complexity of the motor. Furthermore, there is a difficulty in that for conventional cartridges, containing the gun propellants that will launch the projectile, the amount of explosive material is volumetric in communication with the length of the projectile. Thus, there is a limited length possible for the projectile, in view of the necessary amount of gun propellant material to launch it. Furthermore, additional support material to support and protect the solid fuel motor such as sabots of the known type may also reduce the available volumetric amount of gun propellant.

Accordingly there is an aim to improve the solid fuel propelled projectiles of the above type, in order to provide improved penetrators of the KE or PELE type.

### SUMMARY

In one aspect of the invention there is provided the features listed in claim 1. In particular, a gun-launchable solid fuel propelled projectile, formed by an elongated projectile motor case and/or a core piece having solid fuel provided thereon to form a combustion chamber between the motor case and core piece; and an exhaust nozzle provided on the rear side of the combustion chamber; said exhaust nozzle provided by a ring element extending rearwards of the motor case. By providing an aerospike profile surrounding the core piece and extending the aerospike profile rearward of the ring element a substantial longer core piece can be used in cartridges that are of a standard size, significantly improving the impacting power of projectile.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figure 1 shows a first embodiment of a gun-launchable solid fuel propelled projectile;
Figure 2 shows the embodiment of Figure 1 in a launching cartridge;
Figure 3 shows another embodiment of a gun-launchable solid fuel propelled projectile;
Figure 4 shows an embodiment for locking a slidable core piece in a motor case.

### DETAILED DESCRIPTION

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

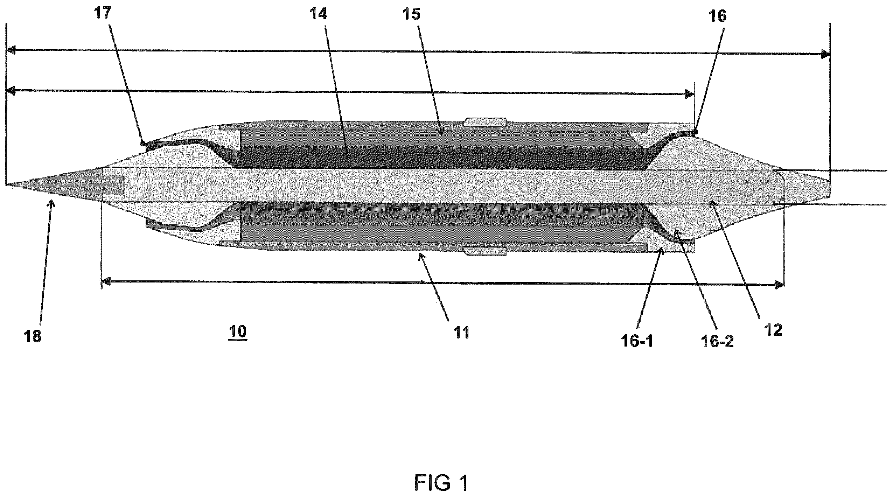

Now turning to Figure 1, there is shown a gun-launchable solid fuel propelled projectile 10. The projectile 10 is formed by an elongated projectile motor case 11 and a core 12. A combustion chamber 14 between the motor case 11 and core piece 12 is formed by fuel provided 15 provided on an inner wall of the motor case. The combustion chamber 14may be designed according to known conventional principles and is not limited to a solid fuel on the motor case 11, but solid fuel may also be provided on the core piece 12 and/or a combination is possible. An exhaust nozzle 16 is provided on the rear side of the combustion chamber 14. The exhaust nozzle provided by a ring element 16-1 extending rearwards of the motor case 11, and an aerospike profile 16-2 surrounding the core piece 12. The aerospike profile 16-2 freely extends rearward of the ring element 16-1, that is, the profile is not flanked by an additional nozzle structure. Due to the absence of such further nozzle structure, the advantage of this shape is that it can extend much further into a cartridge, and at the same time extend a central core piece 12, which aids to its penetrating power, yet without additional nozzle structure that would reduce the available volumetric amount of gun propellant. Thus, the only extension that need to be accommodated is the central core piece 12 that is provided with the aerospike profile 16-2, which is volumetrically relatively limited in size and can yet increase the penetrating power of the projectile substantially. Such an aerospike nozzle profile is a profile that can be designed by known principles and is characterised by, seen in rearward direction, a convergent and then divergent profiled ring 16-2 opposite a divergent central aerospike profile, seen in lateral direction of aerospike profile 16-1. The convergent divergent nozzle structure will provide a combustion gas flow alongside the converging end profile of the aerospike, hence the name, and will concentrate the ejected gas flow along an axial direction of the projectile in rearward direction, optimally using it to generate forward thrust.

It is noted that the shown solid fuel propelled projectile is of a ramjet type, comprising an air intake 17 provided on the front side of the projectile providing air into the combustion chamber. This has an advantage, since the projectile does not need an additional oxidator on board for converting the solid fuel in the combustion chamber. In this specification, the term fuel is used both for self oxidizing fuel, containing an oxidator, typically used as rocket fuel or rocket propellant; and non-self oxidizing fuel; where an additional oxidator is provided from the surroundings, typically known as ramjet fuel. Also, an embodiment may be feasible that contains a oxidator and obviates the inlet structure. Ignition of the solid fuel 15 may be ignited by the gun propellant or by self ignition, e.g. if due to the high velocity the fuel reaches ignition temperature. In the embodiment, the air intake 17 may be of a bicone axisymmetric air intake that is per se known to the skilled person. Other intake forms are possible, for instance: a single cone design, o triple cone, quadrupel cone, etc. The intake may be segmented (non-axisymetric), may be of an 'external compression' type, a 'mixed compression' type, (as illustrated) an 'internal compression'; or a 'pitot' intake also known to the skilled person. The design of Figure 1 has a front end that has sharp aerodynamic extension 18 to the rod 12 that functions as a lead in to the intake duct 17. The embodiment of Figure 1 is designed as a Kinetic Energy (KE) embodiment, wherein the core piece 12 is provided as a penetrator rod of a high relative density material to enhance kinetic impact. Suitable materials may be Tungsten, depleted Uranium etc. By the inventive design, a rod length can be extended more than 5%, or even more than 7%, which significantly increases the impacting power. Length to diameter ratio may be in the order of 15 or higher, for instance higher than 18.5 or even ranging in the order 19-21.

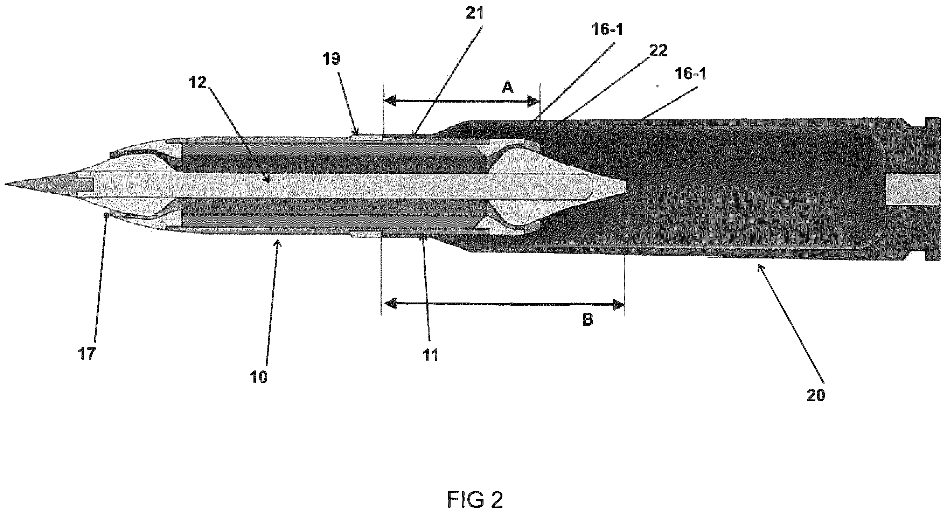

Figure 2 shows the embodiment of a projectile 10, in this case, a SFRJ assisted KE penetrator, similar or identical to Figure 1, now held in a launching cartridge 20. The projectile 10 is stabilized by a rotating band 19 to the cartridge wall 21, that abuts the projectile mantel 11 and provided for obtaining spin. Other stabilizing means may be provided, such as stabilizing fins. The projectile outer wall extends over a length A into the cartridge 20, and the central core piece extends over a length B into the cartridge, which is substantially larger than A, for instance, larger than 20 mm, depending on the calibre type used. Since the rod itself is of a very limited diameter, in view of the required length to diameter ratio, and the aerospike profile 16-1 is also limited in volume respective to the length A, in a standard cartridge, more volumetric space is available for gun propellants, which aids to the range and velocities wherein the projectile can be engaged. The design is not limited to specific ratios or geometric dimensions but can be adapted according to an intended use. For instance, as an alternative use, the projectile includes a mantle that is designed as a PELE device, with a high density material provided in the motor case 11.

Figure 2 shows, in contrast to the Figure 1 structure, an additional pusher plate 22, which is not part of the projectile 10 but is used as a launching aid. Accordingly a pusher plate 22 at least partly surrounds the aerospike profile 16-2 and abuts ring element 16-1 and the motor case 11, and pusher plate 22 as temporary rear structure extends into the cartridge 20.

Before launch, the aerospike structure also extends rearward of the pusher plate. The pusher plate design is structured to support the exhaust nozzle 16, formed by the ring element 16-1 and aerospike profile 16-2 that may be structurally combined by one or more struts. The pusher plate may be annular in shape to protect the nozzle structure. To this end, the pusher plate may close the nozzle keel (orifice) and mechanically supports both the central core piece 12 and the motor case 11. The aerospike profile 16-1 will only partly be exposed to launching forces, which may also be partly deflected to the pusher plate 22 due to its spike design. By suitable construction of the plate design, impacting forces can be distributed suitably over the ring element 16-1 and 16-2 so that both elements are thrusted sufficiently relative to each other, so that supporting mechanical struts between the two elements remain intact. In certain embodiments the pusher plate 22 may be designed to transduce some of the ignition of the gun propellant to the solid fuel of the ramjet motor, in order to ignite it e.g. by the compression of the air in the intake and corresponding temperature raise. In other embodiments, ignition of the solid fuel may be achieved by the impacting pressure and corresponding temperature raise of the inlet structure itself.

### FURTHER EMBODIMENTS

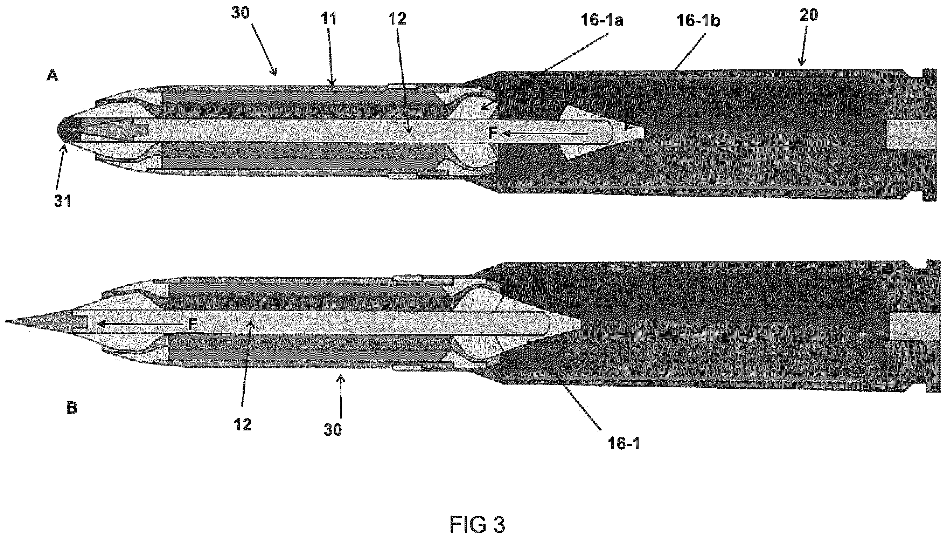

Figure 3 shows another embodiment of a solid fuel ramjet projectile. This profile has a potential of even using a longer core piece, further aiding to its penetrating power or the potential of using more gun propellant since the projectile may be less deep inserted into the cartridge, so that more gun propellant can be provided in the cartridge in order to launch the projectile. The embodiment is provided with a rearward part 16-1a that at least partly forms the aerospike profile, when launched.

In the shown solid fuel projectile 30, wherein the core piece 12 is slidable in said forward and rearward struts, and wherein a locking means is provided to lock the core piece relative to the motor case 11, when the core piece is launched forward, relative to the motor case 11. The locking means can be any structure that fixedly secures the relative position of the core piece 12 relative to the motor case. In the figure, this could be realized by a press fit connection, e.g. the core piece, by means of aerospike 16-1b press fitted to the rearward strut 16-1a.

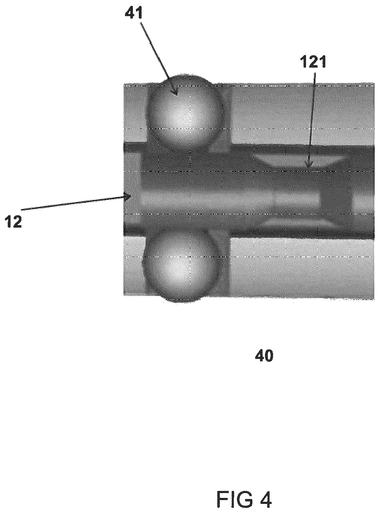

Alternative a form fitting connection may be used, e.g. of the type disclosed in Figure 4, that shows a spring loaded ball lock. Once the central core slides into position, a spring loaded ball lock 40 may secure the relative position of the central piece 12 relative to the motor case 11, e.g. by pushing spring loaded balls 41 into a corresponding depression 121 provided on the central core 12.

Before launch, the inlet structure may be protected by a removable nose cap 31. The nose cape may be constructed to be removed by hand, but it may also be removed by the protruding force F that is exerted on the cap 31 when rod 12 slides forward, relative to the motor case 11, into flight position.

The flight position of the slidable rod 12 demonstrated in Figure 3 may be assumed prior, during or after launch from cartridge 20, and may be aided by ignition of the gun propellants.

While example embodiments were shown for systems and methods, also alternative ways may be envisaged by those skilled in the art having the benefit of the present disclosure for achieving a similar function and result. E.g. some components may be combined or split up into one or more alternative components.

For example, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage.

## Claims

1. A gun-launchable solid fuel propelled projectile, formed by an elongated projectile motor case and/or a core piece having solid fuel provided thereon to form a combustion chamber between the motor case and core piece; and an exhaust nozzle provided on the rear side of the combustion chamber; said exhaust nozzle provided by a ring element extending rearwards of the motor case, and an aerospike profile surrounding the core piece; wherein the aerospike profile freely extends rearward of the ring element.

2. The projectile, according to claim 1, further comprising an air intake provided on the front side of the projectile providing air into the combustion chamber.

3. The solid fuel projectile, according to any previous claim, further comprising
- a pusher plate that at least partly surrounds the aerospike profile and abutting the ring element; and
- a launch cartridge, wherein the motor case and pusher plate partly extends into the cartridge.

4. The projectile according to claim3, wherein the pusher plate has a plurality of openings providing access of to the combustion chamber.

5. The projectile according to any preceding claim, wherein said core piece is provided as a penetrator rod of a high relative density material to enhance kinetic impact.

6. The projectile according to any preceding claim, wherein the motor case and the core piece are coupled via a strut.

7. The projectile according to claim 6, wherein a rearward strut at leasts partly forms the aerospike profile.

8. The projectile according to claim 6 or 7, wherein said core piece is slidable in said forward and rearward struts, and wherein a locking means is provided to lock the core piece relative to the motor case.

9. The projectile according to claim 8, wherein the locking means is formed by a press fit connection.

10. The projectile according to claim 8, wherein the locking means is formed by a form fitting connection.

11. The projectile according to any preceding claim, wherein the core piece is provided with a conical front profile; said conical front profile provided with a removable nose cap.

12. The projectile according to any preceding claim, wherein the ring element is provided with a, seen in rearward direction, convergent and then divergent profile; wherein the divergent profile is provided opposite, seen in lateral direction of the aerospike profile.

13. The projectile according to any preceding claim, wherein the pusher plate is provided with slanted inner walls that unload from the airospike profile.

14. The projectile according to any preceding claim, wherein the pusher plate partly supports the ring element and partly supports a rear strut.
